# EUROPEAN PATENT APPLICATION

(11) **EP 2 980 764 A1**
(43) Date of publication of application: **03.02.2016**
(21) Application number: 14190241.1
(22) Date of filing: 24.10.2014
(51) Int. Cl.: G07F 17/32

(54) **A method for operating a gaming system**

(30) Priority: 31.07.2014 AU 2014208249
(71) Applicant: Taupe Overseas Limited, Tortola (VG)
(72) Inventor: Tang, Yong, Tortola (VG)
(74) Representative: Bridle, Andrew Barry

(57) **Abstract**

The present invention discloses a method for operating a game, which comprises a step of using HASH algorithm to encrypt the initial game result that generated by a random generator of the game system. Further, when the game is ended, all the game results may be revealed to the participator, therefore determining the change of result during operation of the game by participator is possible. This method can be guaranteed the fairness of the game, which can be largely promoted in this industry.

## Description

### Technical Field

The present invention generally relates to a method for operating a gaming system.

Preferred embodiments of the invention have been developed primarily for enabling the playing of games, and more particularly to embodying a method with an encryption step for operating the games so as to determine whether the initial game result is changed or not after the relevant game has ended.

### Background of the Invention

Any discussion of the prior art throughout the specification should in no way be considered as an admission that such prior art is widely known or forms part of common general knowledge in the field.

Computerized games have largely replaced traditional mechanical game machines, such as slot machines, and are being rapidly adopted to implement computerized versions of games which are traditionally played "live", such as poker and blackjack. These computerized games provide many benefits to the game owner and to the player, like greater reliability, more variety, sound and animation can be presented in the game, and a lower overall cost of production and management.

Even though some current gaming systems use a Random Number Generator to setup the game, a player might still consider it is unfair. It is hard to guarantee the system does not secretly vary the game result. Also, some games allow the player to vary the game outcome before it is revealed. However, the player cannot check if such change is indeed executed.

US pat. No.7, 794, 323 describes a gaming apparatus with encryption and method, in which the gaming apparatus may comprise a display unit, a value input device, and a controller having a processor and a memory that stores first gaming data and encrypted gaming data that was generated by doubly encrypting gaming data utilizing an encryption key of a gaming data authorizing organization and an encryption key of a gaming regulatory organization. The controller may be programmed to doubly decrypt the encrypted gaming data utilizing an encryption key of the gaming data authorizing organization and an encryption key of the gaming regulatory organization to form decrypted gaming data, to check and determine if the first gaming data is authorized based on the decrypted gaming data and the first gaming data, and to cause, if the first gaming data is authorized, the display unit to generate a game display. While this prior art system provides some degree of comfort to the gamer, it still lacks transparency about the accuracy of result of the game.

Accordingly, there is an urgent need to provide a new gaming method that overcomes this limitation of the prior art.

### Summary of the Invention

This invention, at least in the preferred embodiments, responds to the continuing needs refer to above by providing a reliable, effective and novel method for verifying the gaming result so as to better guarantee the fairness of wagering games.

Thus, it is a primary object of the preferred embodiments of the invention to provide an improved method for operating wagering games, in which a special encryption is used to guarantee the fairness of the wagering games. Specifically, the technical solution of the invention is as follows:
A method for operating a gaming system, said method comprising:
   generating an initial random result in a gaming system by a Random Number Generator;
   generating a random string by the system;
   encrypting the initial random result according to the random string generated by the system to generate an encrypted result;
   sending the initial random results, the random string and an actual game result to a participator after the game is ended;
   de-encrypting the encrypted result by a verification procedure provided by the system; and
   determining whether the actual game result is identical to the initial random result initially generated by the system.

In one embodiment of the method of operating a gaming system according to the invention, the initial random result is generated by the Random Number Generator based on software in the system or hardware in the system according to a game rule. In another embodiment of the method of operating a gaming system according to the invention, the software comprises a Random Number Generator algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift.

In another embodiment of the method of operating a gaming system according to the invention, the initial random result is generated by the hardware depending on physical status of the hardware.

In another embodiment of the method of operating a gaming system according to the invention, the initial random result is encrypted by a HASH algorithm.

In another embodiment of the method of operating a gaming system according to the invention, the HASH algorithm comprises SHA Family such as SHA-1, SHA-128, SHA-256, SHA-512, HMAC-SHA, or MD5, or Linear Hash or Universal Hashing, or Min Hash.

In another embodiment of the method of operating a gaming system according to the invention, the method further comprises:
changing the initial game random result by the participator before the game is ended; and
determining whether the actual changed game results are identical to the initial random result generated by the system.

In another embodiment of the method of operating a gaming system according to the invention, the verification procedure comprises using an open source program.

In another aspect of the invention there is provided another technical solution to meet the above needs, wherein this technical solution comprises:
generating an initial random result in a gaming system by a Random Number Generator according to a game rule;
generating a first random string by the system;
encrypting one initial random result by the first random string generated by the system to generate a first encrypted result;
starting a second round of the game so as to generate a second encrypted result by a second random string by a participator;
encrypting the second result of the second round by the system to generate the second encrypted result;
running the game according to the game rule to end this game;
sending the initial random results, the second random string and the actual game result to the participator after the game is ended;
de-encrypting the second encrypted result; and
determining whether the actual second game result are identical to the initial random result initially generated by the system.

In another embodiment of the method of operating a gaming system according to the invention, the initial random result is generated by the Random Number Generator based on software in the system or hardware in the system according to a game rule. In another embodiment of a method of operating a gaming system according to the invention, the software comprises a random number algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift.

In another embodiment of the method of operating a gaming system according to the invention, the initial random result is generated by the hardware depending on the physical status of the hardware.

In another embodiment of the method of operating a gaming system according to an embodiment of the invention, the initial random result and the second random result are encrypted by a HASH algorithm.

In another embodiment of the method of operating a gaming system according to the invention, the HASH algorithm comprises SHA Family such as SHA-1, SHA-128, SHA-256, SHA-512, HMAC-SHA, or MD5, or Linear Hash or Universal Hashing, or Min Hash.

In another embodiment of the method of operating a gaming system according to the invention, the verification procedure comprises using an open source program. According to a further aspect of the invention there is provided a gaming system comprising:
a Random Number Generator for generating an initial random result;
a gaming processor for:
   generating a random string;
   being responsive to the random string for encrypting the initial random result to generate an encrypted result; and
   sending the initial random results, the random string and an actual game
   result to a participator after the game is ended; and
a participator processor for use by the participator for:
   de-encrypting the encrypted result in accordance with a verification procedure; and
   determining whether the actual game result is identical to the initial random
   result initially generated by the system.

According to a yet further aspect of the invention there is provided a gaming system comprising:
a Random Number Generator for generating an initial random result in the gaming system according to a game rule;
a gaming processor for:
   generating a first random string;
   being responsive to the first random string for encrypting one initial random result to generate a first encrypted result;
   receiving a second random string from a participator;
   starting a second round of the game and being responsive to the second random string for generating a second encrypted result;
   running the game according to the game rule to end the game; and
   sending the initial random results, the second random string and the
   actual game result to the participator after the game is ended; and
a participator process for for use by the participator for:
   de-encrypting the second encrypted result; and
   determining whether the actual second game result are identical to the initial
   random result initially generated by the system.

Accordingly, embodiments of this invention can definitely guarantee the fairness of a wagering game, by allowing the participator to examine the validity of the game result.

In addition, the participator may feel comfortable to play with different games under these embodiments, which allows the participator to enjoy the real fun of playing different entertainment games.

Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

### Brief Description of the Drawings

The technical features of the present invention may be clearly set forth with reference to the accompanying drawings. The invention, together with the advantages thereof may be best understood by reference to the following description taken in conjunction with the accompany flowchart drawings, wherein like reference signs identify like elements, and wherein:

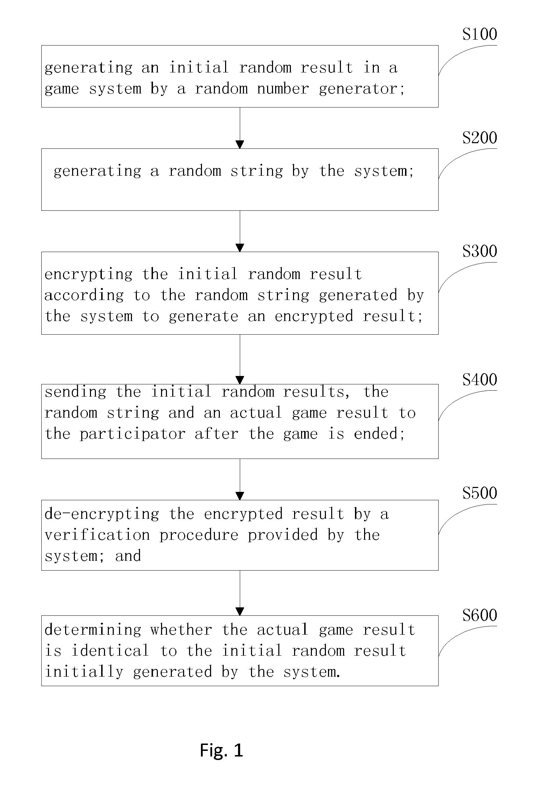

FIG. 1 is a flowchart of the method for operating the game, according to one embodiment of the invention; and

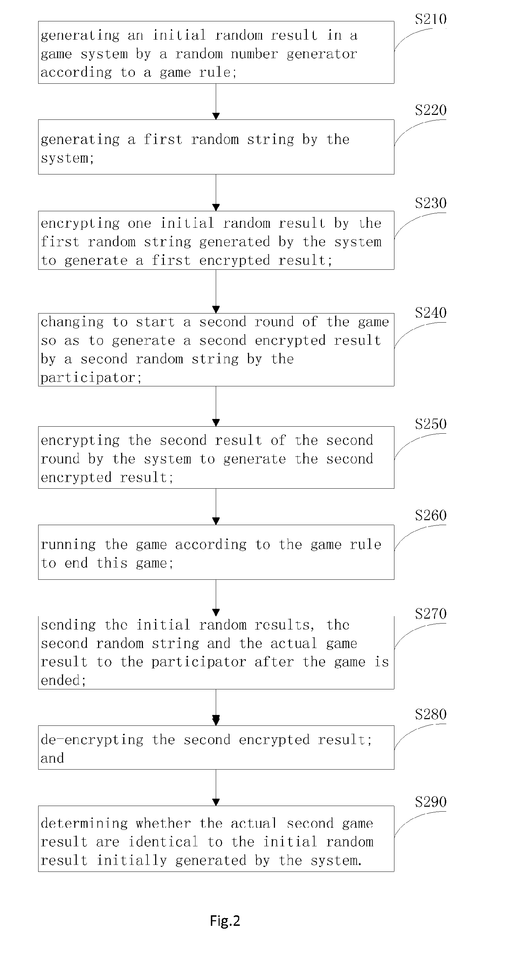

FIG. 2 is flowchart of the method for operating the game, according to another embodiment of the invention.

### Detailed Description of the Invention

The operating steps of the method of the invention will be explained in detail with reference to the accompany flowchart drawings. The description and explanatory embodiment herein are merely used to set forth the present invention, not to limit the invention.

Referring now to the flowchart drawings in detail, a method embodying the present invention is showed, which is suitable for real time result procedure such as Slot, Live Lottery. This method may comprise the following steps:
S100, generating an initial random result in a game system by a Random Number Generator;
S200, generating a random string by the system;
S300, encrypting the initial random result by the random string generated by the system to generate an encrypted result;
S400, sending the initial random results, the random string and an actual game result to the participator after the game is ended;
S500, de-encrypting the encrypted result by a verification procedure provided by the system; and
S600, determining whether the actual game result is identical to the initial random result initially generated by the system.

Specifically, when the game started, the participator may choose to bet on whatever betting type, and then start the game. After that, the system will generate a random result according to the current game rule, and the most important thing in this step is the Random Number Generator should be certificated to make sure that it is real random so as to guarantee the game is fair for all participators. And the initial random result is generated by the Random Number Generator based on a software in the system or a hardware in the system according to a game rule, in which the software comprises a random number algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift, and the hardware base is depending on physical status of the hardware Random Number Generator.

According to the above example, the initial random result is encrypted by a HASH algorithm, which comprises SHA Family such as SHA-1, SHA-128, SHA-256, SHA-512, HMAC-SHA, or MD5, or Linear Hash or Universal Hashing, or Min Hash. The HASH is an encryption algorithm in computer science, which can guarantee other participator cannot de-encrypt the result. In one embodiment of the invention, the above HASH algorithm comprises SHA-512.

If a participator wants to modify the initial game result before the end of the game, just like shifting the reel stop position for the Slot game, plus/minus the score of the winner result of the virtue sport, another game result will be generated which is also encrypted by the random string generated by the system using the above SHA-512 algorithm. The encrypted result would be displayed to the participator to verify that the system does not change the result after it has been confirmed.

After the game is ended, the participator may use the game result and random string to verify the current round HASH code by an open source program. The HASH code result is displayed to the participator, and the participator can confirm if they are identical, if yes, the result may not be changed, if not, the result is definitely changed. In another aspect of the invention, this invention provide a wagering gaming method, which is suitable for produced result game procedure, such as Mahjong, poker game, wheel type game, Dice game, Pull tab, Finite scratch Ticket, Bingo, Keno.

In one example, the method comprises the following steps:
S210, generating an initial random result in a game system by a Random Number Generator according to a game rule;
S220, generating a first random string by the system;
S230, encrypting one initial random result by the first random string generated by the system to generate a first encrypted result;
S240, changing to start a second round of the game so as to generate a second encrypted result by a second random string by the participator;
S250, encrypting the second result of the second round by the system to generate the second encrypted result;
S260, running the game according to the game rule to end this game;
S270, sending the initial random results, the second random string and the actual game result to the participator after the game is ended;
S280, de-encrypting the second encrypted result; and
S290, determining whether the actual second game result is identical to the initial random result initially generated by the system.

Taking card game as an example, when starting the game, the system may firstly generate a random result by a Random Number Generator, and the system also generate a first random string to encrypt the initial result. With the progress of the game, the participator may choose to end this round to start a new round, cut or burn the card of this round. If end this round, the system may send the initial result, the current result and the verification procedure to reveal all the truth to determine whether the actual result is identical to the initial result. If the participator chooses to cut the card, the system will generate a second random string encrypting the initial result. Then the participator may wait for the end of the game to calculate the amount. Similarly, the system may also de-encrypt the encrypted result to determine whether they are the same.

Preferably, the initial random result is generated by the Random Number Generator based on a software in the system or a hardware in the system according to the game rule. And the software comprises a random number algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift, while the initial random result generated by the hardware is depending on the status of physical Random Number Generator.

In one embodiment, the initial random result and the second random result are encrypted by a HASH algorithm, which comprises SHA Family such as SHA-1, SHA-128, SHA-256, SHA-512, HMAC-SHA, or MD5, or Linear Hash or Universal Hashing, or Min Hash. Preferably, the HASH algorithm is SHA-512.

This invention may provide a simple method for game participator to assure that the game is fair to all the participators, because the system can encrypt the initial game generated by a HASH algorithm, which cannot be changed during the operation of the game. This may guarantee the fairness of the game.

While a particular embodiment of the invention has been shown and described, it will be obvious to those skilled in the art that changes and modifications can be made without departing from the true spirit and scope of the invention. It should be understood that the embodiments of the present invention described above are illustrative only, and all the changes and modifications made by those skilled in the art are covered by the appended claims.

## Claims

1. A method for operating a gaming system, said method comprising:
generating an initial random result in a gaming system by a Random Number Generator;
generating a random string by the system;
encrypting the initial random result according to the random string generated by the system to generate an encrypted result;
sending the initial random results, the random string and an actual game result to a participator after the game is ended;
de-encrypting the encrypted result by a verification procedure provided by the system; and
determining whether the actual game result is identical to the initial random result initially generated by the system.

2. The method for operating a gaming system according to claim 1, wherein the initial random result is generated by a software Random Number Generator or a hardware Random Number Generator in the system according to a game rule.

3. The method for operating a gaming system according to claim 2, wherein the software Random Number Generator comprises a random number algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift.

4. The method for operating a gaming system according to claim 2, wherein the initial random result is generated by the hardware Random Number Generator depending on physical status of the hardware Random Number Generator.

5. The method for operating a gaming system according to claim 1, wherein the initial random result is encrypted by a HASH algorithm.

6. The method for operating a gaming system according to claim 5, wherein the HASH algorithm comprises SHA Family such as SHA-1, SHA-128, SHA-256, SHA-512, HMAC-SHA, or MD5, or Linear Hash or Universal Hashing, or Min Hash.

7. The method for operating a gaming system according to claim 1, wherein the method further comprises:
changing the initial game random result by the participator before the game is ended; and
determining whether the actual changed game result are identical to the initial random result initially generated by the system.

8. The method for operating a gaming system according to claim 1, wherein the verification procedure comprises using an open source program.

9. A method for operating a gaming system, said method comprising:
generating an initial random result in the gaming system by a Random Number Generator according to a game rule;
generating a first random string by the system;
encrypting one initial random result by the first random string generated by the system to generate a first encrypted result;
starting a second round of the game so as to generate a second encrypted result by a second random string by a participator;
encrypting the second result of the second round by the system to generate the second encrypted result;
running the game according to the game rule to end this game;
sending the initial random results, the second random string and the actual game result to the participator after the game is ended;
de-encrypting the second encrypted result; and
determining whether the actual second game result are identical to the initial random result initially generated by the system.

10. The method for operating a gaming system according to claim 9, wherein the initial random result is generated by the Random Number Generator based on software in the system or hardware in the system according to a game rule.

11. The method for operating a gaming system according to claim 10, wherein the software comprises a random number algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift.

12. The method for operating a gaming system according to claim 11, wherein the initial random result is generated by the hardware depending on the physical status of the hardware.

13. The method for operating a gaming system according to claim 9, wherein the initial random result and the second random result are encrypted by a HASH algorithm.

14. The method for operating a gaming system according to claim 13, wherein the HASH algorithm comprises SHA Family such as SHA-1, SHA-128, SHA-256, SHA-512, HMAC-SHA, or MD5, or Linear Hash or Universal Hashing, or Min Hash.

15. The method for operating a gaming system according to claim 9, wherein the verification procedure comprises using an open source program.

16. The method for operating a gaming system according to claim 9, wherein the second random result is generated by the Random Number Generator based on software in the system or hardware in the system according to a game rule.

17. The method for operating a gaming system according to claim 16, wherein the software comprises a random number algorithm comprising Blum Blum Shub, Complementary-multiply-with-carry, Inversive Congruential Generator, ISAAC (cipher), KISS (Keep It Simple, Stupid), Lagged Fibonacci Generator, Linear Congruential Generator, Linear Feedback Shift Register, Maximal Periodic Reciprocals, Mersenne Twister, Multiply-with-carry, Naor-Reingold Pseudorandom Function, Park-Miller Random Number Generator, RC4 PRGA, Well Equidistributed Long-period Linear, Wichmann-Hill or Xorshift.

18. The method for operating a gaming system according to claim 16, wherein the second random result is generated by the hardware depending on physical status of the hardware.
